# EUROPÄISCHE PATENTANMELDUNG

(11) **EP 3 360 604 A1**
(43) Veröffentlichungstag der Anmeldung: **15.08.2018**
(21) Anmeldenummer: 18152447.1
(22) Anmeldetag: 19.01.2018
(51) Int. Cl.: A62C 3/16, B32B 7/00, B32B 19/04, E05G 1/024, H02G 3/08

(54) **BRANDSCHUTZGEHÄUSE**

(30) Priorität: 10.02.2017 DE 102017102682
(71) Anmelder: PRIORIT AG, 63457 Hanau (DE)
(72) Erfinder: Müller-Otto, Jens, 08427 Fraureuth (DE); Lotz, Armin, 63589 Linsengericht (DE)
(74) Vertreter: Wolf, Michael

(57) **Zusammenfassung**

Die Erfindung betrifft ein Brandschutzgehäuse, umfassend eine Gehäusewand (1), die von außen beginnend betrachtet zunächst aus einer wasserhaltige Schicht (1.1) und weiter innen aus einer faserhaltigen Schicht (1.2) gebildet ist. Nach der Erfindung ist vorgesehen, dass die faserhaltige Schicht (1.2) zwischen der wasserhaltigen Schicht (1.1) und einer wasseraufnehmenden, eine Innenseite der Gehäusewand (1) bildenden Schicht (1.3) angeordnet ist.

## Beschreibung

Die Erfindung betrifft ein Brandschutzgehäuse gemäß dem Oberbegriff des Patentanspruchs 1.

Ein Brandschutzgehäuse der eingangs genannten Art wird von der Anmelderin hergestellt und vertrieben. Dieses besteht aus einer Gehäusewand, die von außen beginnend betrachtet zunächst aus einer wasserhaltige Schicht und weiter innen aus einer faserhaltigen Schicht gebildet ist. Anzumerken ist dabei, und dies gilt auch für die weiter unten erläuterte erfindungsgemäße Lösung, dass der Begriff "Gehäusewand" in diesem Zusammenhang nicht nur die vertikalen Wände des Brandschutzgehäuses umfasst, sondern gegebenenfalls auch den Boden, die Decke oder eine Tür/Klappe desselben. Ein solches Brandschutzgehäuse verhindert dabei im Brandfall effektiv einen Temperaturanstieg in seinem Innern, so dass ein im Brandschutzgehäuse angeordnetes elektrisches Gerät in seiner Funktion durch den Brand außerhalb des Brandschutzgehäuses zumindest für eine gewisse Zeit nicht gestört wird.

Der Erfindung liegt die Aufgabe zugrunde, ein Brandschutzgehäuse der eingangs genannten Art zu verbessern. Insbesondere soll ein Brandschutzgehäuse geschaffen werden, welches neben der Temperaturregulierung auch eine gute Regulierung der Luftfeuchtigkeit in seinem Innern ermöglicht.

Diese Aufgabe ist mit einem Brandschutzgehäuse der eingangs genannten Art durch das im Kennzeichen des Patentanspruchs 1 aufgeführten Merkmal gelöst.

Nach der Erfindung ist also vorgesehen, dass die faserhaltige Schicht zwischen der wasserhaltigen Schicht und einer wasseraufnehmenden, eine Innenseite der Gehäusewand bildenden Schicht angeordnet ist.

Mit anderen Worten zeichnet sich das erfindungsgemäße Brandschutzgehäuse also dadurch aus, dass eine zusätzliche, wasseraufnehmende Schicht auf der ins Innere des Brandschutzgehäuses weisenden Seite der Wand angeordnet ist, welche im Brandfall die Luftfeuchtigkeit im Brandschutzgehäuse durch Aufnahme von Wasser reguliert.

Andere vorteilhafte Weiterbildungen des erfindungsgemäßen Brandschutzgehäuses ergeben sich aus den abhängigen Patentansprüchen.

Das erfindungsgemäße Brandschutzgehäuse einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

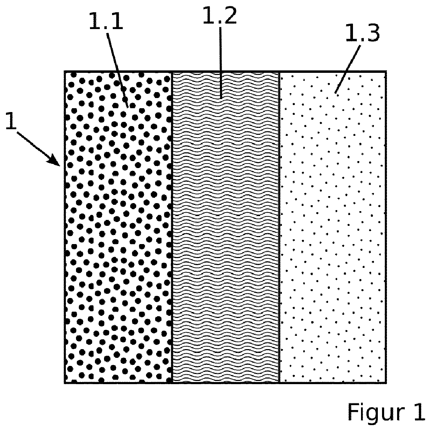

Es zeigt
- Figur 1: schematisch einen Querschnitt durch die Gehäusewand eines erfindungsgemäßen Brandschutzgehäuses.

Die in Figur 1 dargestellte, zu dem erfindungsgemäßen Brandschutzgehäuse gehörende Gehäusewand 1 ist in bekannter Weise von außen beginnend zunächst aus einer wasserhaltigen Schicht 1.1 und weiter innen aus einer faserhaltigen Schicht 1.2 gebildet.

Bezüglich der wasserhaltigen Schicht 1.1 ist dabei besonders bevorzugt vorgesehen, dass diese aus einem nichtbrennbaren Plattenbaustoff, insbesondere dem von der Anmelderin hergestellten Plattenmaterial mit dem Markennamen Priodek, gebildet ist.

Weiterhin ist vorzugsweise vorgesehen, dass die wasserhaltige Schicht 1.1 eine Dichte von etwa 1000 bis 1600 kg/m³ aufweist.

Darüber hinaus ist vorzugsweise vorgesehen, aber nicht extra dargestellt, dass die wasserhaltige Schicht 1.1 nach außen mit einer Oberfläche, zum Beispiel mit Dekor, versehen ist.

Bezüglich der faserhaltigen Schicht 1.2 ist besonders bevorzugt vorgesehen, dass diese aus Mineralwolle (weitere Informationen hierzu siehe: https://de.wikipedia.org/w/index.-php?title=Mineralwolle&oldid=160041349) gebildet ist.

Wesentlich für das erfindungsgemäße Brandschutzgehäuse ist nun, dass die faserhaltige Schicht 1.2 zwischen der wasserhaltigen Schicht 1.1 und einer wasseraufnehmenden, eine Innenseite der Gehäusewand 1 bildenden Schicht 1.3 angeordnet ist. Wie eingangs erläutert, sind auf diese Weise im Brandfall geringere Luftfeuchtigkeitswerte im Innern des Brandschutzgehäuses realisierbar.

Bezüglich der Anordnung der Schichten ist schließlich, wie aus Figur 1 ersichtlich, besonders bevorzugt vorgesehen, dass wahlweise die wasserhaltige Schicht 1.1 und die faserhaltige Schicht 1.2 und/oder die faserhaltige Schicht 1.2 und die wasseraufnehmende Schicht 1.3 einander flächig berührend ausgebildet sind.

### Bezugszeichenliste

- 1: Gehäusewand
- 1.1: wasserhaltige Schicht
- 1.2: faserhaltige Schicht
- 1.3: wasseraufnehmende Schicht

## Patentansprüche

1. Brandschutzgehäuse, umfassend eine Gehäusewand (1), die von außen beginnend betrachtet zunächst aus einer wasserhaltige Schicht (1.1) und weiter innen aus einer faserhaltigen Schicht (1.2) gebildet ist,
**dadurch gekennzeichnet,**
**dass** die faserhaltige Schicht (1.2) zwischen der wasserhaltigen Schicht (1.1) und einer wasseraufnehmenden, eine Innenseite der Gehäusewand (1) bildenden Schicht (1.3) angeordnet ist.

2. Brandschutzgehäuse nach Anspruch 1,
**dadurch gekennzeichnet,**
**dass** die wasserhaltige Schicht (1.1) aus einem nichtbrennbaren Plattenbaustoff gebildet ist.

3. Brandschutzgehäuse nach Anspruch 1 oder 2,
**dadurch gekennzeichnet,**
**dass** die wasserhaltige Schicht (1.1) eine Dichte von 1000 bis 1600 kg/m³ aufweist.

4. Brandschutzgehäuse nach einem der Ansprüche 1 bis 3,
**dadurch gekennzeichnet,**
**dass** die wasserhaltige Schicht (1.1) nach außen mit einer Oberfläche versehen ist.

5. Brandschutzgehäuse nach einem der Ansprüche 1 bis 4,
**dadurch gekennzeichnet,**
**dass** die faserhaltige Schicht (1.2) aus Mineralwolle gebildet ist.

6. Brandschutzgehäuse nach einem der Ansprüche 1 bis 5,
**dadurch gekennzeichnet,**
**dass** die wasserhaltige Schicht (1.1) und die faserhaltige Schicht (1.2) einander flächig berührend ausgebildet sind.

7. Brandschutzgehäuse nach einem der Ansprüche 1 bis 6,
**dadurch gekennzeichnet,**
**dass** die faserhaltige Schicht (1.2) und die wasseraufnehmende Schicht (1.3) einander flächig berührend ausgebildet sind.
